(19) Europäisches Patentamt
European Patent Office
Office européen des brevets

(11) **EP 1 786 114 A1**

(12) **EUROPÄISCHE PATENTANMELDUNG**

(43) Veröffentlichungstag:
**16.05.2007 Patentblatt 2007/20**

(51) Int Cl.:
***H04B 1/707*** *(2006.01)*

(21) Anmeldenummer: 06022895.4

(22) Anmeldetag: **03.11.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **09.11.2005 DE 102005053301**

(71) Anmelder: **ATMEL Germany GmbH**
**74072 Heilbronn (DE)**

(72) Erfinder: **Poegel, Frank, Dr.**
**01309 Dresden (DE)**

(54) **Detektionseinheit und Verfahren zur Detektion von Datensymbolen**

(57) Die Erfindung betrifft eine Detektionseinheit zur Detektion von in einem demodulierten Signal enthaltenen Datensymbolen, wobei sendeseitig eine Bandspreizung mit Hilfe von ersten Sequenzen erfolgt, deren erste Chips jeweils einen von zwei unterschiedlichen ersten Werten annehmen. Die erfindungsgemäße Detektionseinheit weist folgende Einheiten auf: a) eine Sequenzbereitstellungseinheit, die zum Bereitstellen einer Gruppe von zweiten Sequenzen mit mindestens einem zweiten Chip ausgebildet ist, wobei jede zweite Sequenz einer ersten Sequenz zugeordnet ist und jeder zweite Chip einen jeweiligen von mindestens zwei unterschiedlichen zweiten Werten annimmt, die sich betragsmäßig von den ersten Werten unterscheiden, und wobei die Gruppe mindestens eine zweite Sequenz aufweist, die höherstufiger ist als die ersten Sequenzen, b) eine mit der Sequenzbereitstellungseinheit verbundene Korrelationseinheit, die zum Berechnen von Korrelationsergebnissen durch Korrelieren des demodulierten Signals mit jeder zweiten Sequenz der Gruppe ausgebildet ist, und c) eine mit der Korrelationseinheit verbundene Auswerteeinheit, die zum Ableiten der Werte der Datensymbole durch Auswerten der Korrelationsergebnisse ausgebildet ist. Die Erfindung betrifft weiterhin eine Sende-/Empfangsvorrichtung und eine integrierte Schaltung mit einer solchen Detektionseinheit sowie ein entsprechendes Detektionsverfahren.

FIG.3

**Beschreibung**

Die vorliegende Erfindung betrifft eine Detektionseinheit und ein Verfahren zur Detektion von in einem demodulierten Signal enthaltenen Datensymbolen. Die Erfindung betrifft weiterhin eine Sende-/Empfangsvorrichtung und eine integrierte Schaltung mit einer solchen Detektionseinheit.

Die Erfindung liegt auf dem Gebiet der Telekommunikation. Sie liegt insbesondere auf dem Gebiet von DSSS-Telekommunikationssystemen (direct sequence spread spectrum), bei denen sendeseitig mit Hilfe von ersten Sequenzen, wie z.B. PN-Sequenzen (pseudo noise), eine Bandspreizung erfolgt, die empfängerseitig durch eine entsprechende Entspreizung mit Hilfe von zweiten Sequenzen rückgängig gemacht wird, wobei jede zweite Sequenz einer ersten Sequenz zugeordnet und aus dieser ableitbar oder sogar mit dieser identisch ist.

Die Stufigkeit der empfängerseitig verwendeten zweiten Sequenzen, d.h. die Anzahl der unterschiedlichen Werte, die die Chips der zweiten Sequenzen annehmen, entspricht in bekannten DSSS-Telekommunikationssystemen der Stufigkeit der sendeseitig verwendeten ersten Sequenzen. Nehmen die Chips der ersten Sequenzen z.B. die zwei logischen Werte null und eins oder - hierzu äquivalent -die zwei antipodalen Werte $\pm 1$ an, so kommen üblicherweise auch im Empfänger zweistufige zweite Sequenzen zum Einsatz, deren Chips genau zwei unterschiedliche Werte annehmen, z.B. null und eins oder $\pm 1$.

Nachteilig ist hierbei, daß bei zu erwartenden Störeinflüssen, wie Verzerrungen z.B. durch typische Übertragungskanäle und/oder Degradationen infolge der jeweiligen Empfängerrealisierung, ohne weitere Gegenmaßnahmen die Fehlerwahrscheinlichkeit (Symbol-, Bit-, Rahmenfehlerrate etc.) bei der Entscheidung der Datensymbole relativ hoch und damit die Leistungsfähigkeit der Detektion relativ gering ist. Gegenmaßnahmen zur Erhöhung der Leistungsfähigkeit, wie z.B. fortgeschrittene Entzerrungs- oder MLSE-Techniken (maximum likelihood sequence estimation) oder verbesserte Empfängerrealisierungen bedingen üblicherweise einen höheren Implementierungsaufwand und/oder einen erhöhten Energieverbrauch der Sende-/Empfangsvorrichtung.

Vor diesem Hintergrund liegt der Erfindung die Aufgabe zugrunde, eine Detektionseinheit und ein Verfahren zur Detektion von in einem demodulierten Signal enthaltenen Datensymbolen anzugeben, die auch unter zu erwartenden Störeinflüssen eine niedrige Fehlerwahrscheinlichkeit erreichen und dennoch einfach zu implementierende und energiesparend zu betreibende Sende-/Empfangsvorrichtungen ermöglichen. Es ist weiterhin die Aufgabe der Erfindung, eine entsprechende Sende-/Empfangsvorrichtung und eine entsprechende integrierte Schaltung anzugeben.

Erfindungsgemäß wird diese Aufgabe gelöst durch eine Detektionseinheit, eine Sende-/Empfangsvorrichtung, eine integrierte Schaltung und ein Verfahren mit den Merkmalen der Patentansprüche 1, 15, 16 bzw. 17.

Die erfindungsgemäße Detektionseinheit zur Detektion von in einem demodulierten Signal enthaltenen Datensymbolen, wobei sendeseitig eine Bandspreizung mit Hilfe von ersten Sequenzen erfolgt, deren erste Chips jeweils einen von zwei unterschiedlichen ersten Werten annehmen, enthält: a) eine Sequenzbereitstellungseinheit, die zum Bereitstellen einer Gruppe von zweiten Sequenzen mit mindestens einem zweiten Chip ausgebildet ist, wobei jede zweite Sequenz einer ersten Sequenz zugeordnet ist und jeder zweite Chip einen jeweiligen von mindestens zwei unterschiedlichen zweiten Werten annimmt, die sich betragsmäßig von den ersten Werten unterscheiden, und wobei die Gruppe mindestens eine zweite Sequenz aufweist, die höherstufiger ist als die ersten Sequenzen, b) eine mit der Sequenzbereitstellungseinheit verbundene Korrelationseinheit, die zum Berechnen von Korrelationsergebnissen durch Korrelieren des demodulierten Signals mit jeder zweiten Sequenz der Gruppe ausgebildet ist, und c) eine mit der Korrelationseinheit verbundene Auswerteeinheit, die zum Ableiten der Werte der Datensymbole durch Auswerten der Korrelationsergebnisse ausgebildet ist.

Die erfindungsgemäße Sende-/Empfangsvorrichtung und die erfindungsgemäße integrierte Schaltung weisen jeweils eine solche Detektionseinheit auf.

Das erfindungsgemäße Verfahren zur Detektion von in einem demodulierten Signal enthaltenen Datensymbolen, wobei sendeseitig eine Bandspreizung mit Hilfe von ersten Sequenzen erfolgt, deren erste Chips jeweils einen von zwei unterschiedlichen ersten werten annehmen, weist folgende Schritte auf: a) Bereitstellen einer Gruppe von zweiten Sequenzen mit mindestens einem zweiten Chip, wobei jede zweite Sequenz einer ersten Sequenz zugeordnet ist und jeder zweite Chip einen jeweiligen von mindestens zwei unterschiedlichen zweiten werten annimmt, die sich betragsmäßig von den ersten Werten unterscheiden, und wobei die Gruppe mindestens eine zweite Sequenz aufweist, die höherstufiger ist als die ersten Sequenzen, b) Berechnen von Korrelationsergebnissen durch Korrelieren des demodulierten Signals mit jeder zweiten Sequenz der Gruppe, und c) Ableiten der Werte der Datensymbole durch Auswerten der Korrelationsergebnisse.

Das Wesen der Erfindung besteht darin, das demodulierte Signal mit Hilfe einer Gruppe von zweiten Sequenzen zu entspreizen, die mindestens eine zweite Sequenz aufweist, die höherstufiger ist als die sendeseitig verwendbaren ersten Sequenzen und daher im Vergleich zu den ersten Sequenzen eine höhere Anzahl unterschiedlicher Werte annehmen kann. Bei zweistufigen ersten Sequenzen, deren Chips ("erste Chips") beispielsweise jeweils einen der zwei werte $\pm 1$ bzw. 0,1 ("erste werte") annehmen, weist mindestens eine zweite Sequenz der Gruppe mindestens einen Chip auf ("zweiten Chip"), der einen von mindestens zwei "zweiten" werten (z.B. $\pm 2$ bzw. $\pm 2, \pm 4$) annimmt, die sich betragsmäßig von den ersten Werten unterscheiden.

Dies ermöglicht es, das demodulierte Signal auch unter zu erwartenden Störeinflüssen, wie Verzerrungen z.B. durch typische Übertragungskanäle und/oder Degradationen infolge der jeweiligen Empfängerrealisierung, korrekt zu detektieren (entscheiden), so daß die Fehlerwahrscheinlichkeit (Symbol-, Bit-, Rahmenfehlerrate etc.) der Detektion sinkt, wenn die Datensymbole z.B. über typische verzerrende Übertragungskanäle wie frequenzselektive Mehrwegekanäle oder zeitvariante und frequenzselektive Mobilfunkkanäle übertragen werden und/oder das empfangene Signal zusätzliche Verzerrungen z.B. durch Empfangsfilter erfährt, mit einer Bitbreite von nur wenigen Bits quantisiert wird etc. pp..

Die Erfindung ist weiterhin sehr einfach zu realisieren, so daß einfach aufgebaute und energiesparend zu betreibende implementierungen der Detektionseinheit und damit der Sende-/Empfangsvorrichtung möglich werden. Dies ist insbesondere dann vorteilhaft, wenn - wie bei Anwendungen in der industriellen Überwachung und Steuerung, in Sensornetzwerken, in der Automatisierung oder im Bereich der Computerperipherie - ein extrem geringer Energiebedarf und eine sehr einfache Realisierbarkeit unabdingbar sind. Obwohl die Erfindung nicht auf den IEEE-Standard 802.15.4 beschränkt ist, ist dies exemplarisch bei Sende-/Empfangsvorrichtungen für diesen Kommunikationsstandard der Fall.

Vorteilhafte Ausgestaltungen und Weiterbildungen der Erfindung sind den abhängigen Ansprüchen sowie der Beschreibung unter Bezugnahme auf die Zeichnung zu entnehmen.

In einer vorteilhaften Ausgestaltung der erfindungsgemäßen Detektionseinheit bzw. des erfindungsgemäßen Verfahrens ist der wert des mindestens einen zweiten Chips oder/und seine Chipposition innerhalb seiner zweiten Sequenz so gewählt, daß die Fehlerwahrscheinlichkeit der Detektion infolge der Korrelation mit dieser zweiten Sequenz sinkt, wenn die Datensymbole über mindestens einen typischen Übertragungskanal übertragen werden. Indem die Werte der zweiten Chips einer zweiten Sequenz und/oder die Chippositionen der zweiten Chips innerhalb dieser zweiten Sequenz so gewählt werden, daß die Fehlerwahrscheinlichkeit der Detektion bei einer Übertragung der Datensymbole über mindestens einen typischen (spezifizierten) Übertragungskanal sinkt, verbessert sich die Leistungsfähigkeit der Detektion.

In einer weiteren vorteilhaften Ausgestaltung ist die Anzahl der in einer zweiten Sequenz vorhandenen zweiten Chips so gewählt, daß eine diese Anzahl übersteigende zahl von zweiten Chips keine wesentliche Senkung der Fehlerwahrscheinlichkeit der Detektion bewirkt, wenn die Datensymbole über mindestens einen typischen Übertragungskanal übertragen werden. Hierdurch werden besonders einfache implementierungen ermöglicht.

In einer weiteren vorteilhaften Ausgestaltung nimmt jeder zweite Chip einen jeweiligen von mindestens zwei unterschiedlichen zweiten Werten an, die betragsmäßig jeweils einer ganzzahligen positiven Potenz von zwei entsprechen. Hierdurch werden bei einer geringen Fehlerwahrscheinlichkeit besonders einfache implementlerungen ermöglicht, da die empfängerseitige Korrelationseinheit keine reelle Multiplikationen durchführen muß.

Vorzugsweise nimmt jeder zweite Chip einen jeweiligen von vier unterschiedlichen zweiten Werten an, die betragsmäßig dem doppelten oder vierfachen Wert eines der ersten Werte entsprechen. Hierdurch werden besonders einfache Implementierungen ermöglicht.

Vorzugsweise nimmt jeder zweite Chip einen jeweiligen von zwei unterschiedlichen zweiten Werten an, die betragsmäßig dem doppelten wert eines der ersten Werte entsprechen. Hierdurch werden besonders einfache implementlerungen ermöglicht.

In einer weiteren vorteilhaften Ausgestaltung stimmt das Vorzeichen jedes zweiten Chips einer zweiten Sequenz überein mit dem Vorzeichen des positionsgleichen Chips derjenigen empfängerseitig verwendbaren zweistufigen Sequenz, die derjenigen ersten Sequenz zugeordnet ist, der diese zweite Sequenz zugeordnet ist. Indem die Vorzeichen der zweiten Chips jeweils übereinstimmen mit dem Vorzeichen des jeweils positionsgleichen (d.h. indexgleichen) Chips der eigentlich empfängerseitig verwendbaren zweistufigen Sequenz, wird die Fehlerwahrscheinlichkeit und der Implementierungsaufwand gesenkt.

In einer weiteren vorteilhaften Ausgestaltung weist jede zweite Sequenz mindestens einen dritten Chip auf, der jeweils einen von zwei unterschiedlichen dritten Werten annimmt, die betragsmäßig mit einem der ersten werte übereinstimmen. Hierdurch werden besonders einfache implementierungen ermöglicht. Außerdem wird so der für die Leistungsfähigkeit abträgliche Fall vermieden, daß sich sämtliche Chipwerte einer zweiten Sequenz nur durch einen festen (d.h. von Chipindex zu Chipindex gleichen) Faktor von den indexmäßig entsprechenden Chipwerten einer eigentlich empfängerseitig zu verwendenden zweistufigen Sequenz unterscheiden.

Vorzugsweise stimmt in jeder zweiten Sequenz die Gesamtzahl der zweiten und dritten Chips mit der Zahl der in dieser zweiten Sequenz insgesamt vorhandenen Chips überein. Damit sind in den zweiten Sequenzen keine Chips vorhanden, die weder einen der ersten noch einen der zweiten werte aufweisen, was die Implementierung vereinfacht.

In einer vorteilhaften Ausgestaltung der erfindungsgemäßen Detektionseinheit umfaßt die von der Sequenzbereitstellungseinheit bereitgestellte Gruppe insgesamt $n \geq 1$ zweite Sequenzen, während die Korrelationseinheit $n$ Multipliziereinheiten sowie $n$ nachgeschaltete Integrationseinheiten aufweist, wobei die jeweils mit der Sequenzbereitstellungseinheit verbundenen Multipliziereinheiten $n$ Produktsignale berechnen, indem (individuell verzögerte oder unverzögerte) Signalwerte des demodulierten Signals mit Chipwerten jeweils einer der zweiten Sequenzen multipliziert werden, und nachfolgend jede Integrationseinheit ein Korrelationsergebnis bereitstellt, indem eine Anzahl von Signalwerten des entsprechenden Produktsignals addiert wird. Eine solche Realisierung der Korrelationseinheit ist sehr einfach, benötigt sehr wenig Betriebsenergie und ermöglicht eine hohe Leistungsfähigkeit in der Detektionsfehlerrate.

Vorzugsweise weisen die Multipliziereinheiten Mittel zur Vorzeichenumkehr und Mittel zur Bitverschiebung auf. Der Hardwareaufwand und der Energieverbrauch der Detektionseinheit reduziert sich hierdurch weiter.

In einer weiteren vorteilhaften Ausgestaltung weist die Sequenzbereitstellungseinheit genau ein Speichermittel auf, das ausgebildet ist, genau eine (d.h. nur eine) der zweiten Sequenzen zu speichern. Ein Speichermittel, dessen Größe so bemessen ist, kann vorteilhaft sehr einfach implementiert und energiesparend betrieben werden.

Vorzugsweise ist das Speichermittel als rückgekoppeltes Schieberegister ausgeführt. Die sehr einfache Struktur eines Schieberegisters aus in Reihe geschalteten Registerzellen ermöglicht eine sehr effiziente und einfache Realisierung der Sequenzbereitstellungseinheit mit sehr geringem Energiebedarf. So ist z.B. weder eine Berechnung von Speicheradressen noch eine komplexe Ansteuerlogik für das Schieberegister erforderlich.

Vorzugsweise stellt die Sequenzbereitstellungseinheit die zweiten Sequenzen an Ausgängen von jeweiligen (mehreren) Registerzellen des Schieberegisters bereit. Hierzu sind Mittel zum Takten des rückgekoppelten Schieberegisters vorgesehen. Auf diese Weise können sehr einfach sämtliche zweiten Sequenzen der Gruppe mit oder ohne zeitlichem Versatz untereinander bereitgestellt werden.

Die Erfindung wird nachfolgend anhand der in den schematischen Figuren der Zeichnung angegebenen Ausführungsbeispiele näher erläutert. Hierbei zeigen

Fig. 1 ein "Wireless Personal Area Network" (WPAN) nach dem IEEE-Standard 802.15.4 mit erfindungsgemäßen Sende-/EMpfangsvorrichtungen;

Fig. 2 eine Empfangseinheit mit erfindungsgemäßer Detektionseinheit;

Fig. 3 ein Ausführungsbeispiel einer erfindungsgem. Detektionseinheit; und

Fig. 4 Simulationsergebnisse zur Leistungsfähigkeit der Detektionseinheit gemäß Figur 3.

In den Figuren sind gleiche und funktionsgleiche Elemente und Signale - sofern nicht anders angegeben - mit denselben Bezugszeichen versehen.

Wenngleich prinzipiell auf beliebige DSSS-Kommunikationssysteme anwendbar, wird die vorliegende Erfindung nachfolgend am Beispiel eines "ZigBee"-Kommunikationssystems nach dem Kommunikationsstandard IEEE 802.15.4 erläutert.

Zur drahtlosen Übertragung von Informationen über relativ kurze Distanzen können sog. "Wireless Personal Area Networks" (WPANs) verwendet werden, die wenig oder sogar keine Infrastruktur benötigen, so daß kleine, einfache, energieeffiziente und kostengünstige Geräte für einen breiten Anwendungsbereich implementiert werden können.

Der Standard IEEE 802.15.4 spezifiziert niederratige WPANs, die mit Rohdatenraten bis max. 250 kbit/s und ortsfesten oder mobilen Geräten für Anwendungen in der industriellen Überwachung und Steuerung, in Sensornetzwerken, in der Automatisierung, sowie im Bereich der Computerperipherie und für interaktive Spiele geeignet sind. Neben einer sehr einfachen und kostengünstigen Implementierbarkeit der Geräte ist für derartige Anwendungen ein extrem geringer Energiebedarf von entscheidender Bedeutung. So werden mit diesem Standard Batterielaufzeiten von mehreren Monaten bis zu mehreren Jahren angestrebt.

Auf der Ebene der physikalischen Schicht spezifiziert IEEE 802.15.4 im nahezu weltweit verfügbaren ISM-Frequenzband (industrial, scientific, medical) um 2,4 GHZ für Rohdatenraten von $f_B$=250 kbit/s eine Bandspreizung (Spreading) mit einer Chiprate von $f_C$=2 Mchip/s sowie eine Offset-QPSK-Modulation (quarternary phase shift keying).

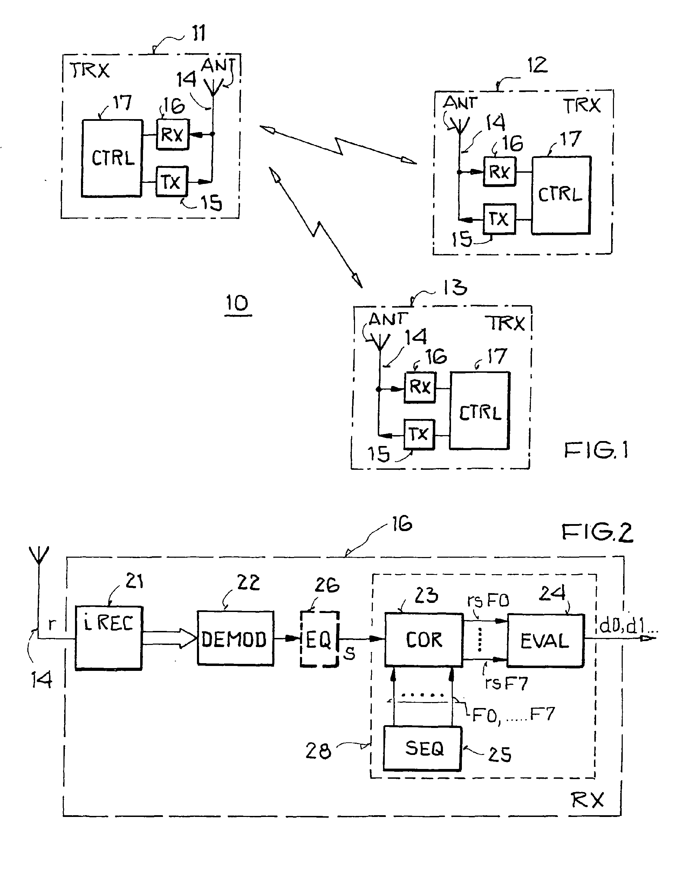

**Figur 1** zeigt ein Beispiel eines WPAN 10 nach IEEE 802.15.4. Es umfaßt drei Sende-/ Empfangsvorrichtungen (transceiver, TRX) 11-13 in Form von ortsfesten oder mobilen Geräten, die mittels Funksignalen drahtlos Informationen austauschen. Bei der Sende-/Empfangsvorrichtung 11 handelt es sich um ein sog. Vollfunktionsgerät, das die Funktion des WPAN-Koordinators übernimmt, während es sich bei den Sende-/Empfangsvorrichtungen 12, 13 um sog. Teilfunktionsgeräte handelt, die dem Vollfunktionsgerät 11 zugeordnet sind und nur mit diesem Daten austauschen können. Neben der in Fig. 1 dargestellten sternförmigen Netzwerktopologie, bei der die bidirektionale Datenübertragung nur zwischen jeweils einem der Teilfunktionsgeräte 12, 13 und dem Vollfunktionsgerät 11, nicht jedoch zwischen den Teilfunktionsgeräten 12, 13 erfolgen kann, sieht der Standard auch sog. "Peer-to-Peer"-Topologien vor, bei denen sämtliche Vollfunktionsgeräte mit jeweils allen anderen Vollfunktionsgeräten kommunizieren können.

Die Sende-/Empfangsvorrichtungen 11-13 umfassen jeweils eine Antenne 14, eine mit der Antenne verbundene Sendeeinheit (transmitter, TX) 15, eine mit der Antenne verbundene Empfangseinheit (receiver, RX) 16 und eine mit der Sende- und der Empfangseinheit verbundene Kontrolleinheit (control unit, CTRL) 17 zur Steuerung der Sende- und Empfangseinheiten 15, 16. weiterhin beinhalten die Sende-/Empfangsvorrichtungen 11-13 jeweils eine in Figur 1 nicht dargestellte Energieversorgungseinheit in Form einer Batterie etc. zur Energieversorgung der Einheiten 15-17, sowie eventuell weitere Komponenten wie Sensoren, Aktoren, Schnittstellen etc..

Im folgenden wird davon ausgegangen, daß die Datenübertragung im ISM-Frequenzband um 2,4 GHz erfolgt.

Die Sendeeinheit 15 jeder Sende-/Empfangsvorrichtung wandelt den jeweils zu sendenden Datenstrom gemäß IEEE 802.15.4 in ein über ihre Antenne 14 abzustrahlendes Funksignal um. Hierzu wird der zu sendende Datenstrom (Rohdatenrate fB=250 kbit/s) zunächst in eine Folge von PN-Sequenzen (pseudo noise) umgesetzt, indem in jeder Symbolperiode (TS=16$\mu$s) vier Datenbits verwendet werden, um eine PN-Sequenz aus einem Sequenzvorrat von insgesamt 16 quasiortho-gonalen PN-Sequenzen P0, P1, ..., P15 auszuwählen. Jedem Symbol d0, d1, d2, ... aus vier Datenbits wird auf diese Weise eine symbolwertspezifische PN-Sequenz aus 32 Chips zugeordnet (Chiprate fC=2 Mchip/s). Diese Umsetzung in PN-Sequenzen entspricht einer Bandspreizung (spreading). Die aufeinanderfolgenden PN-Sequenzen werden anschließend - mit Halbsinus-Impulsformung - Offset-QPSK-moduliert (quarternary phase shift keying), spektral in das ISM-Frequenz-band verschoben und schließlich für die Übertragung verstärkt.

Dementsprechend wandelt die Empfangseinheit 16 jeder Sende-/EMpfangsvorrichtung ein von ihrer Antenne 14 empfangenes (und von der Sendeeinheit einer anderen Sende-/Empfangsvorrichtung nach dem IEEE-Standard 802.15.4 erzeugtes) Funksignal möglichst fehlerfrei in die gesendeten Daten um, indem das Funksignal unter anderem demoduliert und die Daten anschließend detektiert (entschieden) werden.

Die Sendeeinheit 15 und die Empfangseinheit 16 einer Sende-/Empfangsvorrichtung sind hierbei Teil einer (in Figur 1 nicht dargestellten) integrierten Schaltung (IC), z.B. eines ASICs (application specific integrated circuit), während die Kontrolleinheit 17 durch einen (ebenfalls nicht dargestellten) Mikrocontroller realisiert ist. vorteilhaft kann die Sende-/ Empfangsvorrichtung auch nur einen (z.B. als ASIC ausgeführten) IC aufweisen, der die Funktionen der Sendeeinheit 15, der Empfangseinheit 16 und der Kontrolleinheit 17 wahrnimmt.

**Figur 2** zeigt ein Blockschaltbild einer inkohärenten Empfangseinheit (RX) 16, die folgende in Serie geschaltete Funktionsblöcke umfaßt: einen inneren Empfänger (iREC) 21, einen differentiellen Demodulator (DEMOD) 22 und eine erfindungsgemäße Detektionseinheit 28, die eine Korrelationseinheit (COR) 23 und eine nachgeschaltete Auswerteeinheit (EVAL) 24 sowie eine mit der Korrelationseinheit 23 verbundene Sequenzbereitstellungseinheit (SEQ) 25 aufweist. Außerdem weist die Empfangseinheit 16 optional einen Entzerrer (EQ) 26 zwischen dem Demodulator 22 und der Detektionseinheit 28 auf.

Der mit der Antenne 14 der Sende-/Empfangsvorrichtung verbundene innere Empfänger 21 überführt das empfangene Funksignal r in ein komplexes Basisbandsignal b (Einhüllende) mit komplexwertigen Abtastwerten im Takt der sendeseitig verwendeten Chips der PN-Sequenzen (fC). Jeder komplexe Abtastwert umfaßt hierbei einen Realteil (Inphase-Komponente I) und einen Imaginärteil (Quadratur-Komponente Q). Komplexwertige Signale wie das Basisbandsignal b sind in den Figuren durch Pfeile mit Doppellinien dargestellt.

Das Basisbandsignal b wird anschließend durch den differentiellen Demodulator 22 in ein demoduliertes Signal überführt, das reellwertige Signalwerte im Chiptakt fC aufweist. Vorteilhaft generiert der differentielle Demodulator 22 ein demoduliertes Signal, dessen Signalwerte anstelle von sog. Hardbits (d.h. zweistufige werte) sog. Soft-Informationswerte (höherstufige Signalwerte) aufweist.

Das demodulierte Signal wird anschließend optional teilweise entzerrt. Der hierzu vorgesehene einfache Entzerrer 26 bestimmt vorzugsweise einen Mittelwert des demodulierten Signals und befreit dieses anschließend durch Subtraktion des Mittelwertes von einem Gleichanteil. Im folgenden wird das differentiell demodulierte (und ggf. entzerrte) Signal mit s bezeichnet.

Anschließend werden die im differentiell demodulierten (und ggf. entzerrten) Signal s enthaltenen Datensymbole d0, d1, d2, ... durch die erfindungsgemäße Detektionseinheit 28 detektiert, d.h. entschieden. Hierzu wird das im Chiptakt fC vorliegende Signal s zunächst in der Korrelationseinheit (COR) 23 mit einer Gruppe von Sequenzen F0, F1, ..., F7, die durch die Sequenzbereitstellungseinheit 25 bereitgestellt wird, korreliert und dadurch entspreizt. Dies führt auf Korrelationsergebnisse rsF0, rsF1, ..., rsF7, die ein Maß für die Übereinstimmung des Signals s mit der jeweiligen Sequenz F0, F1, ..., F7 darstellen. In der Auswerteeinheit (EVAL) 24 werden die Korrelationsergebnisse rsF0, rsF1, ..., rsF7 schließlich ausgewertet und die Datensymbole d0, d1, d2, ... detektiert (entschieden). Je niedriger die Wahrscheinlichkeit von Fehlentscheidungen bei der Detektion ist, d.h. je niedriger die Symbol-, Bit- oder die Rahmenfehlerrate ist, umso höher ist die Leistungsfähigkeit der Detektionseinheit 28.

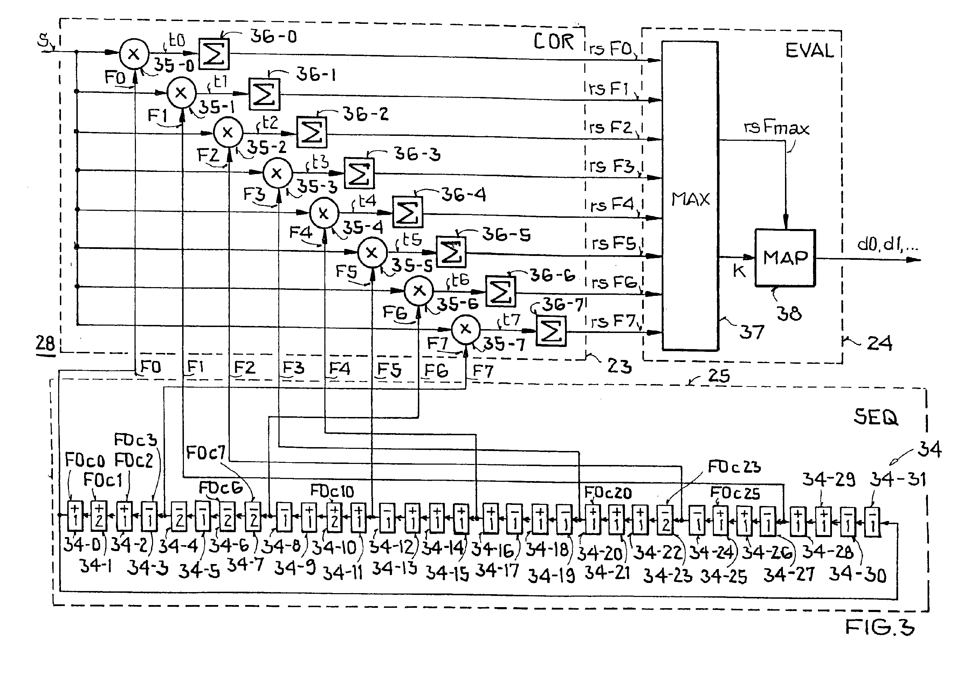

Ein Ausführungsbeispiel der erfindungsgemäßen Detektionseinheit 28 ist nachfolgend mit Bezug auf Fig. 3 beschrieben. Zunächst wird jedoch beschrieben, wie die gemäß Figur 2 von der Sequenzbereitstellungseinheit 25 bereitgestellten Sequenzen F0, F1, ..., F7 beschaffen sind und bestimmt werden.

Im folgenden werden die sendeseitig verwendbaren PN-Sequenzen P0, P1, ..., P15 als "erste" Sequenzen und die erfindungsgemäß empfängerseitig bereitzustellenden Sequenzen F0, F1, ..., F7 als "zweite" Sequenzen bezeichnet.

In der nachfolgenden Tabelle sind unter anderem die Chipwerte der ersten und zweiten Sequenzen angegeben.

Bei den ersten Sequenzen P0, P1, ..., P15 handelt es sich um 16 quasi-orthogonale Sequenzen gemäß IEEE 802.15.4. Jede erste Sequenz P0, P1, ..., P15 umfaßt 32 Chips, die jeweils einen wert von logisch null (0) oder eins (1) annehmen, so daß die ersten Sequenzen zweistufig ausgestaltet sind. Wie aus der Tabelle ersichtlich ist, nehmen z.B. die ersten acht Chips der ersten Sequenz P0 die logischen werte {11011001} an. Anstelle von logischen werten (0, 1) können hierzu äquivalente werte, wie z.B. die antipodalen werte +1 bzw. -1 verwendet werden. Unabhängig hiervon werden die zwei unterschiedlichen Werte, die die Chips der ersten Sequenzen annehmen, nachfolgend als "erste" werte bezeichnet.

Für die Chips z.B. der ersten Sequenz P0 werden zur Vereinfachung der Beschreibung die folgenden Parameter eingeführt: P0c0 (Chip mit Index null (c0) von P0, in der Tabelle ganz links aufgeführt), P0c1 (Chip mit Index 1 (c1) von P0), ..., P0c31 (Chip mit Index 31 (c31), in der Tabelle ganz rechts aufgeführt). Analog hierzu bezeichnet z.B. P5c2 den Chip mit Index 2 der Sequenz P5, also den dritten Chip von links in der P5-Zeile der Tabelle. Außerdem werden die Chips der ersten Sequenzen P0, P1, ... im folgenden auch als "erste" Chips bezeichnet.

| | | | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|---|---|
| Pi: erste Sequenz i (sendeseitig) | | | | | | | | | | | | | | | (Pic0 Pic1 Pic2 Pic3 ... Pic30 Pic31) | | | | | | | | | | | | | | | | | |
| Fi: Betrag der zweiten Sequenz i (empfängerseitig) | | | | | | | | | | | | | | | (Fic0 Fic1 Fic2 Fic3 ... Fic30 Fic31) | | | | | | | | | | | | | | | | | |
| P0: | 1 | 1 | 0 | 1 | 1 | 0 | 0 | 1 | 1 | 1 | 0 | 0 | 0 | 0 | 1 | 1 | 0 | 1 | 0 | 1 | 0 | 0 | 1 | 0 | 0 | 0 | 1 | 0 | 1 | 1 | 1 | 0 |
| G0: | + | + | + | - | - | - | - | - | - | + | + | + | - | + | + | + | + | - | + | - | + | + | + | - | - | + | + | - | + | + | - | - | |
| F0: | 1 | 2 | 1 | 1 | 2 | 1 | 2 | 2 | 1 | 1 | 2 | 1 | 1 | 1 | 1 | 1 | 1 | 1 | 1 | 1 | 1 | 1 | 2 | 1 | 1 | 1 | 1 | 1 | 1 | 1 | 1 | 1 |
| P1: | 1 | 1 | 1 | 0 | 1 | 1 | 0 | 1 | 1 | 0 | 0 | 1 | 1 | 1 | 0 | 0 | 0 | 0 | 1 | 1 | 0 | 1 | 0 | 1 | 0 | 0 | 1 | 0 | 0 | 0 | 1 | 0 |
| G1: | + | + | - | - | + | + | + | - | - | - | - | - | - | + | + | + | - | + | + | + | + | - | + | - | + | + | + | - | - | + | + | - | |
| F1: | 1 | 1 | 1 | 1 | 1 | 2 | 1 | 1 | 2 | 1 | 2 | 2 | 1 | 1 | 2 | 1 | 1 | 1 | 1 | 1 | 1 | 1 | 1 | 1 | 1 | 1 | 1 | 2 | 1 | 1 | 1 | 1 |
| P2: | 0 | 0 | 1 | 0 | 1 | 1 | 1 | 0 | 1 | 1 | 0 | 1 | 1 | 0 | 0 | 1 | 1 | 1 | 0 | 0 | 0 | 0 | 1 | 1 | 0 | 1 | 0 | 1 | 0 | 0 | 1 | 0 |
| G2: | - | + | + | - | + | + | - | - | + | + | + | - | - | - | - | - | - | + | + | + | - | + | + | + | + | - | + | - | + | + | + | - | |
| F2: | 1 | 1 | 1 | 1 | 1 | 1 | 1 | 1 | 1 | 2 | 1 | 1 | 2 | 1 | 2 | 2 | 1 | 1 | 2 | 1 | 1 | 1 | 1 | 1 | 1 | 1 | 1 | 1 | 1 | 1 | 1 | 2 |
| P3: | 0 | 0 | 1 | 0 | 0 | 0 | 1 | 0 | 1 | 1 | 1 | 0 | 1 | 1 | 0 | 1 | 1 | 0 | 0 | 1 | 1 | 1 | 0 | 0 | 0 | 0 | 1 | 1 | 0 | 1 | 0 | 1 |
| G3: | + | + | + | - | - | + | + | - | + | + | - | - | + | + | + | - | - | - | - | - | - | + | + | + | - | + | + | + | + | - | + | - | |
| F3: | 1 | 1 | 1 | 2 | 1 | 1 | 1 | 1 | 1 | 1 | 1 | 1 | 1 | 2 | 1 | 1 | 2 | 1 | 2 | 2 | 1 | 1 | 2 | 1 | 1 | 1 | 1 | 1 | 1 | 1 | 1 | 1 |
| P4: | 0 | 1 | 0 | 1 | 0 | 0 | 1 | 0 | 0 | 0 | 1 | 0 | 1 | 1 | 1 | 0 | 1 | 1 | 0 | 1 | 1 | 0 | 0 | 1 | 1 | 1 | 0 | 0 | 0 | 0 | 1 | 1 |
| G4: | + | - | + | - | + | + | + | - | - | + | + | - | + | + | - | - | + | + | + | - | - | - | - | - | - | + | + | + | - | + | + | + | |
| F4: | 1 | 1 | 1 | 1 | 1 | 1 | 1 | 2 | 1 | 1 | 1 | 1 | 1 | 1 | 1 | 1 | 1 | 2 | 1 | 1 | 2 | 1 | 2 | 2 | 1 | 1 | 2 | 1 | 1 | 1 | 1 | 1 |
| P5: | 0 | 0 | 1 | 1 | 0 | 1 | 0 | 1 | 0 | 0 | 1 | 0 | 0 | 0 | 1 | 0 | 1 | 1 | 1 | 0 | 1 | 1 | 0 | 1 | 1 | 0 | 0 | 1 | 1 | 1 | 0 | 0 |
| G5: | - | + | + | + | + | - | + | - | + | + | + | - | - | + | + | - | + | + | - | - | + | + | + | - | - | - | - | - | - | + | + | + | |
| F5: | 1 | 1 | 1 | 1 | 1 | 1 | 1 | 1 | 1 | 1 | 1 | 2 | 1 | 1 | 1 | 1 | 1 | 1 | 1 | 1 | 2 | 1 | 1 | 2 | 1 | 2 | 2 | 1 | 1 | 2 | 1 | 1 |
| P6: | 1 | 1 | 0 | 0 | 0 | 0 | 1 | 1 | 0 | 1 | 0 | 1 | 0 | 0 | 1 | 0 | 0 | 0 | 1 | 0 | 1 | 1 | 1 | 0 | 1 | 1 | 0 | 1 | 1 | 0 | 0 | 1 |
| G6: | - | + | + | + | - | + | + | + | + | - | + | - | + | + | + | - | - | + | + | - | + | + | - | - | + | + | + | - | - | - | - | - | |
| F6: | 1 | 1 | 2 | 1 | 1 | 1 | 1 | 1 | 1 | 1 | 1 | 1 | 1 | 1 | 1 | 2 | 1 | 1 | 1 | 1 | 1 | 1 | 1 | 1 | 2 | 1 | 1 | 2 | 1 | 2 | 2 | 1 |
| P7: | 1 | 0 | 0 | 1 | 1 | 1 | 0 | 0 | 0 | 0 | 1 | 1 | 0 | 1 | 0 | 1 | 0 | 0 | 1 | 0 | 0 | 0 | 1 | 0 | 1 | 1 | 1 | 0 | 1 | 1 | 0 | 1 |
| G7: | - | - | - | - | - | + | + | + | - | + | + | + | + | - | + | - | + | + | + | - | - | + | + | - | + | + | - | - | + | + | + | - | |
| F7: | 2 | 1 | 2 | 2 | 1 | 1 | 2 | 1 | 1 | 1 | 1 | 1 | 1 | 1 | 1 | 1 | 1 | 1 | 1 | 2 | 1 | 1 | 1 | 1 | 1 | 1 | 1 | 1 | 1 | 2 | 1 | 1 |
| P8: | 1 | 0 | 0 | 0 | 1 | 1 | 0 | 0 | 1 | 0 | 0 | 1 | 0 | 1 | 1 | 0 | 0 | 0 | 0 | 0 | 0 | 1 | 1 | 1 | 0 | 1 | 1 | 1 | 1 | 0 | 1 | 1 |
| G8: | - | - | - | + | + | + | + | + | + | - | - | - | + | - | - | - | - | + | - | + | - | - | - | + | + | - | - | + | - | - | + | + | |
| F8: | 1 | 2 | 1 | 1 | 2 | 1 | 2 | 2 | 1 | 1 | 2 | 1 | 1 | 1 | 1 | 1 | 1 | 1 | 1 | 1 | 1 | 1 | 2 | 1 | 1 | 1 | 1 | 1 | 1 | 1 | 1 | 1 |
| P9: | 1 | 0 | 1 | 1 | 1 | 0 | 0 | 0 | 1 | 1 | 0 | 0 | 1 | 0 | 0 | 1 | 0 | 1 | 1 | 0 | 0 | 0 | 0 | 0 | 0 | 1 | 1 | 1 | 0 | 1 | 1 | 1 |
| G9: | - | - | + | + | - | - | - | + | + | + | + | + | + | - | - | - | + | - | - | - | - | + | - | + | - | - | - | + | + | - | - | + | |

55 50 45 40 35 30 25 20 15 10 5

(fortgesetzt)

| | | | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|---|---|
| Pi: erste Sequenz i (sendeseitig) | | | | | | | | | | | | | | | (Pic0 Pic1 Pic2 Pic3 ... Pic30 Pic31) | | | | | | | | | | | | | | | | | |
| Fi: Betrag der zweiten Sequenz i (empfängerseitig) | | | | | | | | | | | | | | | (Fic0 Fic1 Fic2 Fic3 ... Fic30 Fic31) | | | | | | | | | | | | | | | | | |
| F9: | 1 | 1 | 1 | 1 | 1 | 2 | 1 | 1 | 2 | 1 | 2 | 2 | 1 | 1 | 2 | 1 | 1 | 1 | 1 | 1 | 1 | 1 | 1 | 1 | 1 | 1 | 1 | 2 | 1 | 1 | 1 | 1 |
| P10: | 0 | 1 | 1 | 1 | 1 | 0 | 1 | 1 | 1 | 0 | 0 | 0 | 1 | 1 | 0 | 0 | 1 | 0 | 0 | 1 | 0 | 1 | 1 | 0 | 0 | 0 | 0 | 0 | 0 | 1 | 1 | 1 |
| G10: | + | - | - | + | - | - | + | + | - | - | - | + | + | + | + | + | + | - | - | - | + | - | - | - | - | - | + | - | + | - | - | - |
| F10: | 1 | 1 | 1 | 1 | 1 | 1 | 1 | 1 | 1 | 2 | 1 | 1 | 2 | 1 | 2 | 2 | 1 | 1 | 2 | 1 | 1 | 1 | 1 | 1 | 1 | 1 | 1 | 1 | 1 | 1 | 1 | 2 |
| P11: | 0 | 1 | 1 | 1 | 0 | 1 | 1 | 1 | 1 | 0 | 1 | 1 | 1 | 0 | 0 | 0 | 1 | 1 | 0 | 0 | 1 | 0 | 0 | 1 | 0 | 1 | 1 | 0 | 0 | 0 | 0 | 0 |
| G11: | - | - | - | + | + | - | - | + | - | - | + | + | - | - | - | + | + | + | + | + | + | - | - | - | + | - | - | - | - | - | + | - |
| F11: | 1 | 1 | 1 | 2 | 1 | 1 | 1 | 1 | 1 | 1 | 1 | 1 | 1 | 2 | 1 | 1 | 2 | 1 | 2 | 2 | 1 | 1 | 2 | 1 | 1 | 1 | 1 | 1 | 1 | 1 | 1 | 1 |
| P12: | 0 | 0 | 0 | 0 | 0 | 1 | 1 | 1 | 0 | 1 | 1 | 1 | 1 | 0 | 1 | 1 | 1 | 0 | 0 | 0 | 1 | 1 | 0 | 0 | 1 | 0 | 0 | 1 | 0 | 1 | 1 | 0 |
| G12: | - | + | - | + | - | - | - | + | + | - | - | + | - | - | + | + | - | - | - | + | + | + | + | + | + | - | - | - | + | - | - | - |
| F12: | 1 | 1 | 1 | 1 | 1 | 1 | 1 | 2 | 1 | 1 | 1 | 1 | 1 | 1 | 1 | 1 | 1 | 2 | 1 | 1 | 2 | 1 | 2 | 2 | 1 | 1 | 2 | 1 | 1 | 1 | 1 | 1 |
| P13: | 0 | 1 | 1 | 0 | 0 | 0 | 0 | 0 | 0 | 1 | 1 | 1 | 0 | 1 | 1 | 1 | 1 | 0 | 1 | 1 | 1 | 0 | 0 | 0 | 1 | 1 | 0 | 0 | 1 | 0 | 0 | 1 |
| G13: | + | - | - | - | - | + | - | + | - | - | - | + | + | - | - | + | - | - | + | + | - | - | - | + | + | + | + | + | + | - | - | - |
| F13: | 1 | 1 | 1 | 1 | 1 | 1 | 1 | 1 | 1 | 1 | 1 | 2 | 1 | 1 | 1 | 1 | 1 | 1 | 1 | 1 | 1 | 2 | 1 | 1 | 2 | 1 | 2 | 2 | 1 | 1 | 2 | 1 |
| P14: | 1 | 0 | 0 | 1 | 0 | 1 | 1 | 0 | 0 | 0 | 0 | 0 | 0 | 1 | 1 | 1 | 0 | 1 | 1 | 1 | 1 | 0 | 1 | 1 | 1 | 0 | 0 | 0 | 1 | 1 | 0 | 0 |
| G14: | + | - | - | - | + | - | - | - | - | + | - | + | - | - | - | + | + | - | - | + | - | - | + | + | - | - | - | + | + | + | + | + |
| F14: | 1 | 1 | 2 | 1 | 1 | 1 | 1 | 1 | 1 | 1 | 1 | 1 | 1 | 1 | 1 | 2 | 1 | 1 | 1 | 1 | 1 | 1 | 1 | 1 | 2 | 1 | 1 | 2 | 1 | 2 | 2 | 2 |
| P15: | 1 | 1 | 0 | 0 | 1 | 0 | 0 | 1 | 0 | 1 | 1 | 0 | 0 | 0 | 0 | 0 | 0 | 1 | 1 | 1 | 0 | 1 | 1 | 1 | 1 | 0 | 1 | 1 | 1 | 0 | 0 | 0 |
| G15: | + | + | + | + | + | - | - | - | + | - | - | - | - | - | + | - | + | - | - | - | + | + | - | - | + | - | - | + | + | - | - | + |
| F15: | 2 | 1 | 2 | 2 | 1 | 1 | 2 | 1 | 1 | 1 | 1 | 1 | 1 | 1 | 1 | 1 | 1 | 1 | 2 | 1 | 1 | 1 | 1 | 1 | 1 | 1 | 1 | 1 | 2 | 1 | 1 | |

Unterhalb jeder ersten Sequenz P0, P1, ... ist in der Tabelle eine der jeweiligen ersten Sequenz zugeordnete und empfängerseitig zur Entspreizung/Korrelation verwendbare Sequenz G0, G1, ..., bzw. G15 eingetragen. Diese ebenfalls zweistufigen Sequenzen sind an das vorstehend mit Bezug auf Fig. 2 erläuterte Empfangskonzept mit einer differentiellen Demodulation angepaßt. Die Chipwerte dieser Sequenzen ergeben sich aus einer logischen XOR-Verknüpfung der logischen werte von jeweils zwei benachbarten ersten Chips der jeweils zugeordneten ersten Sequenz mit einer anschließenden Umsetzung der logischen Ergebniswerte in die antipodalen werte +1 und -1, wobei aus Gründen der Übersichtlichkeit in der Tabelle nur das Vorzeichen dieser Werte eingetragen ist. Analog zu den oben eingeführten Parametern bezeichnet z.B. G4c8 den Chip mit Index 8 der Sequenz G4.

Unterhalb jeder der zweistufigen Sequenzen G0, G1, ... ist in der Tabelle eine weitere der jeweiligen ersten Sequenz zugeordnete und empfängerseitig zur Entspreizung/Korrelation verwendbare vierstufige Sequenz F0, F1, ... eingetragen, deren Chips jeweils einen der Werte $\pm1$ und $\pm2$ annehmen, wobei in der Tabelle in der Zeile für die jeweilige Sequenz F0, F1, ... nur die Beträge (Absolutwerte) der Chipwerte eingetragen sind (z.B. |F0c4| =2 für den fünften Chip von links in der F0-Zeile) und sich die Vorzeichen aus der jeweils darüberliegenden Zeile für die entsprechende Sequenz G0, G1, ... ergeben (im obigen Beispiel G0c4=-1, so daß F0c4=-2 ist). Bei den oberen acht Sequenzen F0, F1, ..., F7 handelt es sich um die erfindungsgemäß bereitzustellende Gruppe von zweiten Sequenzen.

Die zweite Sequenz F0 weist daher die folgenden Chipwerte auf:

$$F0 = \{\ +1\ +2\ +1\ -1\ -2\ -1\ -2\ -2\ -1\ +1\ +2\ +1\ -1\ +1\ +1\ +1\ ...$$

$$...\ +1\ -1\ +1\ -1\ +1\ +1\ +1\ -2\ -1\ +1\ +1\ -1\ +1\ +1\ -1\ -1\ \}\quad (1)$$

Aus der Tabelle ist zu ersehen, daß sich die oberen acht Sequenzen F0, F1, ..., F7 nur durch eine zyklische Verschiebung ihrer Chipwerte voneinander unterscheiden. So ist z.B. das am Anfang der Sequenz F0 vorkommende Wertmuster {+1 +2 +1 -1 -2 -1} in der Sequenz F1 ab dem Chip F1c4, in der Sequenz F2 ab F2c8, in F3 ab F3c12, in F4 ab F4c16, ..., und schließlich in F7 ab F7c28 - bei zyklischer Erweiterung - zu erkennen. Auch die unteren acht Sequenzen F8, F9, ..., F15 unterscheiden sich nur durch eine zyklische Verschiebung voneinander.

Weiterhin ist festzustellen, daß zu jeder Sequenz aus der Gruppe F0, F1, ..., F7 eine Sequenz aus der Gruppe F8, F9, ..., F15 existiert, die sich nur durch eine Vorzeichenumkehr *aller* ihrer Chipwerte unterscheidet. Vergleicht man z.B. die Sequenzen F0 und F8, so stellt man fest, daß sich sämtliche indexgleichen Chipwerte nur in ihrem Vorzeichen unterscheiden. Da dies auch für die Sequenzpaare F1/F9, F2/F10 etc. gilt, ist festzustellen, daß alle Sequenzen der Gruppe F0, F1, ..., F7 in "invertierter" Form in der Gruppe F8, F9, ..., F15 enthalten sind.

Die in den vorhergehenden Absätzen genannten Eigenschaften der Sequenzen F0, F1, ... ermöglichen besonders einfache Realisierungen der Korrelationseinheit 23, der Auswerteeinheit 24 sowie der Sequenzbereitstellungseinheit 25 und damit der Detektionseinheit 28 aus Figur 2. Eine solche Realisierung ist nachstehend mit Bezug auf Figur 3 beschrieben.

Diejenigen Chips der zweiten Sequenzen F0, F1, ..., F7, die einen Wert annehmen, der sich betragsmäßig von den Werten der ersten Chips (d.h. von den "ersten" Werten) unterscheidet, werden nachfolgend als "zweite" Chips bezeichnet. Die Werte, die die zweiten Chips annehmen, werden als "zweite Werte" bezeichnet.

Diejenigen Chips der zweiten Sequenzen F0, F1, ..., F7, die einen Wert annehmen, der betragsmäßig mit einem der ersten werte übereinstimmt, werden nachfolgend als "dritte" Chips bezeichnet. Die Werte, die die dritten Chips annehmen, werden als "dritte" Werte bezeichnet.

Gemäß der Tabelle oder Gleichung (1) weist die Sequenz F0 damit insgesamt M0 = 6 zweite Chips F0c1, F0c4, F0c6, F0c7, F0c10 und F0c23 auf, die jeweils einen der zweiten Werte $\pm2$ annehmen. Außerdem weist F0 insgesamt 32-M0=26 dritte Chips F0c0, F0c2, F0c3, F0c5, F0c8, F0c9, F0c11, ..., F0c22, F0c24, ..., F0c31 auf, die jeweils einen der dritten werte $\pm1$ annehmen. Aufgrund der vorstehend genannten Eigenschaften enthalten auch die Sequenzen F1, F2, ..., F7 jeweils M1 = 6, M2=6, ... bzw. M7=6 zweite und 26 dritte Chips.

Im folgenden soll exemplarisch beschrieben werden, wie die zweiten Sequenzen F0, F1, ..., F7 vorteilhaft bestimmt werden. zunächst ist festzustellen, daß sich im vorstehend beschriebenen Fall die eigentlich empfängerseitig zu verwendenden zweistufigen Sequenzen G0, ..., G15 nur durch eine zyklische Verschiebung und/oder einen Vorzeichenwechsel voneinander unterscheiden. Derartige Eigenschaften vereinfachen die Implementierung von Empfangseinheiten deutlich und sollten daher auch für die erfindungsgemäß empfängerseitig zu verwendenden Sequenzen F0, F1, ... gelten. Insofern ist es in diesem Falle hinreichend, eine einzige zweite Sequenz (z.B. F0) zu bestimmen und die weiteren zweiten Sequenzen durch eine zyklische Verschiebung und/oder einen Vorzeichenwechsel aller Chipwerte von F0 abzuleiten. Wie vorstehend beschrieben, entsprechen die Vorzeichen der Chips der zweiten Sequenz F0 denjenigen der indexgleichen Chips der zweistufigen Sequenz G0. Damit sind noch die Positionen (Indizes) der zweiten Chips innerhalb der Sequenz F0 zu bestimmen.

Die Positionen können vorab z.B. durch Monte-Carlo-Simulationen bestimmt werden, indem ein Sendesignal, bei dem eine Spreizung mit der Sequenz P0 erfolgt ist, über einen für die entsprechende Anwendung typischen Übertragungskanal übertragen wird (im Falle von IEEE 802.15.4 z.B. über einen typischen frequenzselektiven Indoorkanal) und anschließend empfängerseitig detektiert wird, wobei zur Entspreizung/Korrelation eine erste Testsequenz verwendet wird, die sich aus der Sequenz G0 gemäß obiger Tabelle ergibt, indem (nur) der Wert des Chips G0c0 auf zwei verdoppelt wird. Für die Detektion unter Verwendung dieser ersten Testsequenz wird eine Fehlerwahrscheinlichkeit ermittelt (Bit-, Symbol-, Rahmenfehlerrate etc.). Anschließend wird das Empfangssignal bei unveränderter Empfangsleistung unter Verwendung einer zweiten Testsequenz detektiert, bei der anstelle des Chips G0c0 der indexmäßig darauffolgende Chip G0c1 in seinem Wert verdoppelt wird (G0c1 = 2) und wiederum eine Fehlerwahrscheinlichkeit ermittelt. Dieses Verfahren wird bis zur 32. Testsequenz fortgesetzt, bei der (nur) der Chip G0c31 in seinem Wert verdoppelt wird (G0c31 =-2). Schließlich wird die Position, d.h. der Index desjenigen Chips ermittelt, der bei seiner wertmäßigen Verdoppelung auf die niedrigste Fehlerwahrscheinlichkeit geführt hat. Damit ist die Position des ersten "zweiten" Chips von F0 bestimmt.

Zur Bestimmung der Positionen eines weiteren "zweiten" Chips werden weitere Monte-Carlo-Simulationen mit weiteren Testsequenzen durchgeführt, die die wertmäßige Verdoppelung des ersten "zweiten" Chips beibehalten und jeweils einen weiteren noch nicht verdoppelten Chipwert verdoppeln. Auch hier wird als Position (Index) des weiteren "zweiten" Chips diejenigen Position ermittelt, die auf die niedrigste Fehlerwahrscheinlichkeit führt. Dieses Verfahren wird fortgesetzt, bis entweder eine vorgegebene Anzahl M0 von zweiten Chips der Sequenz F0 in ihrer Position festgelegt sind oder aber bis keine weitere wesentliche Senkung der Fehlerwahrscheinlichkeit möglich ist. Die erfindungsgemäß bereitzustellende zweite Sequenz F0 ergibt sich als die beste Testsequenz, die mit diesem Verfahren gefunden wurde.

Dieses Verfahren kann für einen, z.B. einen für die jeweilige Anwendung typischen "worst case"-Übertragungskanal oder für mehrere typische Übertragungskanäle durchgeführt werden, wobei dann z.B. auf die im Mittel über alle typischen übertragungskanäle erzielte Fehlerwahrscheinlichkeit abgestellt wird.

In einem weiteren Ausführungsbeispiel der Erfindung nehmen die zweiten Chips nicht nur zwei unterschiedliche zweite Werte ($\pm 2$) an, sondern mindestens zwei weitere zweite Werte. Auch in diesem Falle wird im Rahmen eines Simulationsverfahrens für einen zweiten Chip derjenige zweite wert ausgewählt, der auf die ggf. im Mittel niedrigste Fehlerwahrscheinlichkeit führt. Vorteilhaft sind hierbei zweite Werte, die betragsmäßig einer ganzzahligen positiven Potenz von zwei (z.B. 2, 4, 8, 16,...) entsprechen, da Multiplikationen mit solchen zweiten werten ($\pm 2$, $\pm 4$, $\pm 8$, $\pm 16$, ...) sehr einfach mit Hilfe von Bit-Shiftern erfolgen können.

Figur 3 zeigt ein Blockschaltbild eines Ausführungsbeispiels der erfindungsgemäßen Detektionseinheit 28 aus Figur 2.

Die Sequenzbereitstellungseinheit 25 weist ein mit der Korrelationseinheit 23 verbundenes Speichermittel 34 auf, dessen Größe so bemessen ist, daß genau eine der zweiten Sequenzen gespeichert werden kann. Im Falle der mit Bezug auf die obige Tabelle erläuterten zweiten Sequenzen F0, F1, ... ist das Speichermittel 34 also zur Speicherung von 32 Chipwerten geeignet. Bei vierstufigen zweiten Chips bedeutet dies einen Speicherplatzbedarf von nur 64 Bit.

Vorzugsweise ist das Speichermittel als rückgekoppeltes Schieberegister 34 mit insgesamt 32 Registerzellen 34-0, 34-1, ..., 34-31 zur Speicherung je eines Chipwertes einer zweiten Sequenz ausgeführt. In Figur 3 ist exemplarisch ein Zustand des Schieberegisters 34 eingezeichnet, bei dem die Registerzellen 34-0, 34-1, ..., 34-31 von links nach rechts die Chipwerte der zweiten Sequenz F0 gemäß Gleichung (1) aufweisen. Werden die Registerzellen des Schieberegisters nun im Chiptakt fC getaktet (nicht in Figur 3 dargestellt), so verschiebt sich der gespeicherte Inhalt der Registerzellen pro Chipperiode 1/fC um eine Registerzelle nach links, so daß am Ausgang der ersten Registerzelle 34-0 in den folgenden 32 Chipperioden die zweite Sequenz F0 bereitgestellt wird. Aufgrund der Rückkopplung im Schieberegister erfolgt die Verschiebung des Inhalts zyklisch, weshalb sich die zweite Sequenz F0 bei fortwährender Taktung anschließend wiederholt.

Wie oben mit Bezug auf die Tabelle erläutert, unterscheiden sich die weiteren zweiten Sequenzen F1, F2, ..., F7 von der zweiten Sequenz F0 lediglich durch eine zyklische Verschiebung. Die zweiten Sequenzen F1, F2, ..., F7 können daher entweder ebenfalls am Ausgang der ersten Registerzelle 34-0 (dann allerdings zeitlich später beginnend als F0) oder aber an Ausgängen anderer Registerzellen (mit oder ohne Zeitversatz bzgl. F0) abgegriffen werden.

In Figur 3 ist dargestellt, an welchen Registerzellen die anderen zweiten Sequenzen F1, F2, ..., F7 abgegriffen werden, wenn sie zeitgleich, d.h. im gleichen Zeitintervall wie die zweite Sequenz F0 bereitgestellt werden sollen. Gemäß der vorstehend erläuterten Tabelle beginnt z.B. die zweite Sequenz F7 mit dem Wertemuster {-2 -1 -2 -2 -1}. Dieses Wertemuster ist in der zweiten Sequenz F0 beginnend mit dem *fünften* Chip von links, d.h. beginnend mit dem Chip F0c4, zu erkennen. Aus diesem Grunde stellt das rückgekoppelte Schieberegister 34 aus Figur 3 die zweiten Sequenzen F0 und F7 genau dann zeitgleich bereit, wenn F7 am Ausgang der *fünften* Registerzelle 34-4 und F0 - wie bereits erläutert - am Ausgang der ersten Registerzelle 34-0 abgegriffen wird. Analoge Betrachtungen zeigen, daß die weiteren zweiten Sequenzen F1, F2, ..., F6 an den Ausgängen der Registerzellen 34-28, 34-24, 34-20, 34-16, 34-12 bzw. 34-8 zeitgleich bereitgestellt werden, wie in Figur 3 dargestellt ist. Zur zeitgleichen Bereitstellung der Gruppe der acht Sequenzen F0, F1, ..., F7 sind daher gemäß Figur 3 acht Ausgänge der Bereitstellungseinheit 25 vorgesehen, die mit den Ausgängen der Registerzellen 34-0, 34-28, 34-24, 34-20, 34-16, 34-12, 34-8 bzw. 34-4 verbunden sind.

Auf diese Weise ist es möglich, mittels eines nur 32 Registerzellen aufweisenden rückgekoppelten Schieberegisters 34, das z.B. mit den Chipwerten der (vorab z.B. mittels des vorstehend beschriebenen Simulationsverfahrens bestimmten) zweiten Sequenz F0 gemäß Gl. (1) initialisiert wird, eine sehr einfache und energiesparende Sequenzbereitstellungseinheit 25 zu realisieren, die geeignet ist, sämtliche acht zweiten Sequenzen F0, F1, ..., F7 bereitzustellen. Die acht Sequenzen F8, F9, ..., F15 werden nicht bereitgestellt. Dies vereinfacht die Realisierung der Korrelationseinheit 23 und der Auswerteeinheit 24 wesentlich, wie im folgenden näher beschrieben ist.

Die Korrelationseinheit 23 weist acht Multipliziereinheiten 35-0, 35-1, ..., 35-7 mit jeweils zwei Eingängen und ebenfalls acht, jeweils einer Multipliziereinheit nachgeschaltete Integrationseinheiten 36-0, 36-1, ..., 36-7 auf.

Den ersten Eingängen der Multipliziereinheiten 35-0, 35-1, ..., 35-7 wird jeweils dasselbe signal zugeführt, nämlich das (ggf. entzerrte) demodulierte Signal s (vgl. Figur 2). Die zweiten Eingänge der Multipliziereinheiten 35-0, 35-1, ..., 35-7 sind mit den Ausgängen der Registerzellen 34-0, 34-28, 34-24, 34-20, 34-16, 34-12, 34-8 bzw. 34-4 des rückgekoppelten Schieberegisters 34 verbunden, so daß ihnen die zweiten Sequenzen F0, F1, ... bzw. F7 zugeführt werden.

Im folgenden wird die Funktionsweise des i-ten Zweiges der Korrelationseinheit erläutert, wobei i=0,1,...,7. Die Multipliziereinheit 35-i multipliziert die Werte des (ggf. entzerrten) demodulierten Signals s mit den Chipwerten der zweiten Sequenz Fi und berechnet so ein Produktsignal ti. Pro Symbolperiode TS werden so 32 Signalwerte des Produktsignals ti erzeugt. Die nachgeschaltete Integrationseinheit 36-i addiert eine vorgegebene Anzahl dieser 32 Signalwerte des entsprechenden Produktsignals ti und stellt so pro Symbolperiode ein Korrelationsergebnis rsFi bereit.

Gemäß der vorstehenden Tabelle können die Chips der zweiten Sequenzen die vier Werte $\pm 1$ und $\pm 2$ annehmen. Die Multiplikation des (ggf. entzerrten) demodulierten Signals s mit den Chipwerten der zweiten Sequenzen bewirkt also in diesem Fall eine Vorzeichenumkehr und/oder eine Verdoppelung der werte des demodulierten Signals s. Daher weisen die Multipliziereinheiten 35-0, 35-1, ..., 35-7 vorteilhaft jeweils einen Vorzeichenumkehrer und einen Bit-Shifter auf.

Die Auswerteeinheit 24 weist eine mit den Integrationseinheiten 36-0, 36-1, ..., 36-7 verbundene Maximalwertbestimmungseinheit (MAX) 37 und eine nachgeschaltete Zuordnungseinheit (MAP) 38 auf.

Die Maximalwertbestimmungseinheit 37 vergleicht pro Symbolperiode acht Korrelationsergebnisse rsF0, rSF1, ..., rsF7 betragsmäßig miteinander und ermittelt den (vorzeichenbehafteten) Wert des betragsmaximalen Korrelationsergebnisses rsFmax sowie einen Sequenzindex k mit ganzzahligen Werten zwischen 0 und 7, der angibt, welche der zweiten Sequenzen F0, F1, ..., F7 diesem vorzeichenbehafteten Wert zuzuordnen ist. Weist also z.B. das Korrelationsergebnis rsF5 den unter allen acht Korrelationsergebnissen maximalen Betrag auf, so ermittelt die Maximalwertbestimmungseinheit 37 den vorzeichenbehafteten Wert rsFmax= rsF5 und den Sequenzindex k = 5, der auf die zweite Sequenz F5 hinweist.

Die Zuordnungseinheit 38 trägt der Tatsache Rechnung, daß in der Korrelationseinheit nur mit den acht zweiten Sequenzen F0, F1, ..., F7, nicht jedoch mit den acht Sequenzen F8, F9, ..., F15 korreliert wurde. Aufgrund der oben beschriebenen Eigenschaft der Sequenzen, gemäß der zu jeder zweiten Sequenz F0, F1, ..., F7 eine der Sequenzen F8, F9, ..., F15 existiert, die sich nur durch eine Vorzeichenumkehr *aller* ihrer Chipwerte unterscheidet, würde sich das Korrelationsergebnis z.B. für F13 nur im Vorzeichen von demjenigen für F5 unterscheiden. Aus diesem Grund wertet die Zuordnungseinheit 38 das Vorzeichen von rsFmax aus.

Die Zuordnungseinheit 38 bestimmt aus dem Sequenzindex k und dem Vorzeichen von rsFmax den wert eines der gesendeten Datensymbole d0, d1, .... Ist der vorzeichenbehaftete Wert rsFmax positiv, so wird derjenige Datensymbolwert bestimmt, dem diejenige der ersten acht Sequenzen P0, P1, ..., P7 zugeordnet ist, der die zweite Sequenz mit dem Sequenzindex k, d.h. Fk, zugeordnet ist. Ist dem Datensymbolwert d=5 z.B. die erste Sequenz P5 zugeordnet und dieser wiederum, wie vorstehend mit Bezug auf die Tabelle erläutert, die zweite Sequenz F5, so bestimmt die zuordnungseinheit 38 im obigen Beispiel den Datensymbolwert zu d = k= 5, falls rsFmax= rsF5 >0.

Ist der vorzeichenbehaftete wert rsFmax jedoch negativ, so bestimmt die Zuordnungseinheit 38 denjenigen Datensymbolwert, dem diejenige der zweiten acht Sequenzen P8, P9, ..., P15 zugeordnet ist, der die zur zweiten Sequenz mit dem Sequenzindex k (Fk) inverse Sequenz zugeordnet ist. Ist dem Datensymbolwert d=13 z.B. die erste Sequenz P13 und dieser wiederum, wie vorstehend mit Bezug auf die Tabelle erläutert, die Sequenz F13=-F5 zugeordnet, so bestimmt die Zuordnungseinheit 38 im obigen Beispiel den Datensymbolwert zu d=k+8=13, falls rsFmax = rsF5 $\leq$ 0.

Das mit Bezug auf Fig. 3 beschriebene Ausführungsbeispiel einer erfindungsgemäßen Detektionseinheit erfordert nur einen minimalen Speicher von 64 Bits, nur acht Multipliziereinheiten, die vorteilhaft als Vorzeichenumkehrer/Bit-Shifter ausgeführt sind, nur 8 Integrationseinheiten, eine Maximalwertbestimmungseinheit und eine einfache Zuordnungseinheit. Diese Detektionseinheit ist einfach zu realisieren und zeichnet sich durch einen niedrigen Energiebedarf aus.

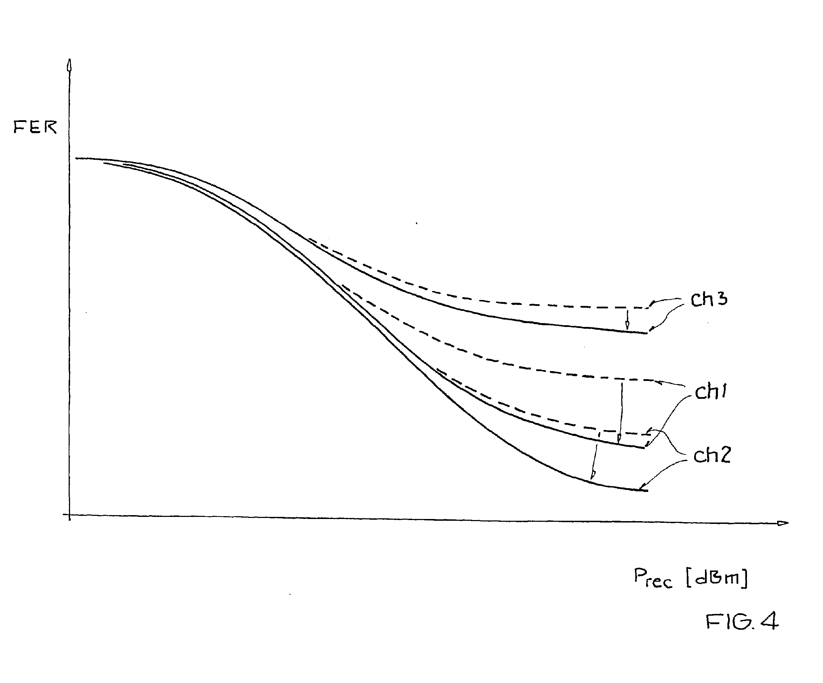

Figur 4 zeigt durch Messungen bestätigte Simulationsergebnisse zur Leistungsfähigkeit einer erfindungsgemäßen Detektionseinheit bzw. eines erfindungsgemäßen Detektionsverfahrens. Im Rahmen der Simulationsuntersuchungen wurden gemäß IEEE 802.15.4 Datenrahmen enthaltende Sendesignale erzeugt, über stochastische Modelle typischer Übertragungskanäle übertragen und schließlich durch eine Empfangseinheit 16 gemäß Figur 2 empfangen. In einer Detektionseinheit 28 nach den Figuren 2 und 3 wurde das demodulierte Signal mit Hilfe der vorstehend beschriebenen zweiten Sequenzen F0, F1, ..., F7 entspreizt und die Datensymbole d0, d1, ... detektiert. Als Maß für die Leistungsfähigkeit wurde die Rahmenfehlerrate FER (frame error rate) ermittelt. In Figur 4 ist die so ermittelte Rahmenfehlerrate FER logarithmisch in Abhängigkeit von der Leistung am Antennenanschluß (Prec) für drei typische Übertragungskanäle ch1-ch3 in Form von durchgezogenen Linien dargestellt. Die Rahmenfehlerraten, die sich ergeben, wenn zur Entspreizung anstelle der zweiten Sequenzen F0, F1, ..., F7 die ebenfalls vorstehend beschriebenen zweistufigen Sequenzen G0, G1, ..., G7 verwendet werden, sind zum Vergleich in Figur 4 durch gestrichelte Linien dargestellt.

Bei den drei typischen Übertragungskanälen ch1-ch3 handelt es sich um die frequenzselektiven Kanalmodelle:

- Übertragungskanal ch1: JTC'94 indoor channel 1,

- Übertragungskanal ch2: JTC'94 indoor channel 2, und

- Übertragungskanal ch3: Exponentielles Kanalmodell,

wobei die Übertragungskanäle ch2 und ch3 im Vergleich zum Übertragungskanal ch1 einen kleineren bzw. größeren wert der RMS-Verzögerungszeit (root mean square delay spread) aufweisen.

Aus den gestrichelten Linien in Figur 4 ist zunächst zu erkennen, daß eine Entspreizung/Korrelation mit den zweistufigen Sequenzen G0, G1, ..., G7 bei allen drei Kanälen ch1-ch3 auf Verläufe der Rahmenfehlerrate FER führen, die mit steigender Empfangsleistung Prec (rechts in Figur 4) nicht gegen den wert null, sondern gegen einen jeweiligen festen Wert, den sog. error floor, tendiert.

Vergleicht man nun für die einzelnen Übertragungskanäle ch1-ch3 die gestrichelte Linie mit der entsprechenden durchgezogenen Linie, so ist festzustellen, daß die Rahmenfehlerrate FER infolge der Korrelation mit den zweiten Sequenzen F0, F1, ..., F7 (durchgezogene Linien) bei allen Übertragungskanälen ch1-ch3 im Vergleich zur Korrelation mit den zweistufigen Sequenzen G0, G1, ..., G7 (gestrichelte Linien) sinkt. Bei hohen Empfangsleistungen sinken die Rahmenfehlerraten besonders stark, so daß sich eine deutliche Reduzierung des jeweiligen error floors ergibt, was in Figur 4 durch Pfeile angedeutet ist. Die Leistungsfähigkeit der Detektion nimmt also durch die erfindungsgemäße Detektionseinheit bzw. das erfindungsgemäße Verfahren zu.

Obgleich die vorliegende Erfindung vorstehend anhand von Ausführungsbeispielen beschrieben wurde, ist sie nicht darauf beschränkt, sondern auf vielfältige Weise modifizierbar. So ist die Erfindung weder auf WPANs an sich, noch auf WPANs gemäß IEEE 802.15.4 bzw. die dort spezifizierten PN-Sequenzen (Anzahl und Länge der Sequenzen, Werte der Chips etc.), Raten/Periodendauern der Chips/Symbole/Bits etc. beschränkt. Auch ist die Erfindung nicht auf die vorstehend angegebenen zweiten Sequenzen beschränkt.

Bezugiszeichenliste

| | |
|---|---|
| 10 | Datenübertragungssystem / WPAN nach IEEE 802.15.4 |
| 11-13 | Sende-/Empfangsvorrichtung, "transceiver" |
| 14 | Antenne |
| 15 | Sendeeinheit, "transmitter" |
| 16 | Empfangseinheit, "receiver" |
| 17 | Kontrolleinheit |
| 21 | innerer Empfänger |
| 22 | Demodulator |
| 23 | Korrelationseinheit, Despreader |
| 24 | Auswerteeinheit, Detektor |
| 25 | Sequenzbereitstellungseinheit |
| 26 | Entzerrer |
| 28 | Detektionseinheit |
| 34 | Speichermittel; Schieberegister |
| 34-0, 34-1, ... | Registerzelle 0 bzw. 1 ... des Schieberegisters |
| 35-0, 35-1, ... | Multipliziereinheit 0 bzw. 1 ... |
| 36-0, 36-1, ... | Integrationseinheit 0 bzw. 1 ... |
| 37 | Maximalwertbestimmungseinheit |
| 38 | Zuordnungseinheit |

| COR | Korrelationseinheit, Despreader |
| --- | --- |
| DEMOD | Demodulator |
| DSSS | direct sequence spread spectrum |
| EQ | Entzerrer |
| EVAL | Auswerteeinheit, Detektor |
| FER | frame error rate |
| IC | Integrierte Schaltung; Chip |
| iREC | innerer Empfänger |
| ISM | industrial, scientific, medical (Frequenzband bei 2,4 GHz) |
| JTC'94 | Joint Standards Committee, Application Note AN9895 |
| MAP | Zuordnungseinheit |
| MAX | Maximalwertbestimmungseinheit |
| PN | pseudo-noise |
| QPSK | quarternary phase shift keying |
| RX | Empfangseinheit, receiver |
| SEO | Sequenzbereitstellungseinheit |
| TRX | Sende-/Empfangsvorrichtung, transceiver |
| TX | Sendeeinheit, transmitter |
| WPAN | Wireless Personal Area Network |

| b | komplexes Basisbandsignal |
| --- | --- |
| ch1, ch2, ... | typische Übertragungskanäle |
| d0, d1, d2, ... | Datensymbole |
| fB | Bitrate |
| fC | Chiprate |
| F0, F1, F2, ... | zweite Sequenzen, zweite Codes (empfangsseitig) |
| F0c0, F0c1, ... | Chips der zweiten Sequenz F0 |
| F0c1, F0c4, ... | zweite Chips der zweiten Sequenz F0 |
| F0c0, F0c2, ... | dritte Chips der zweiten Sequenz F0 |
| G0, G1, ... | empfängerseitig verwendbare zweistufige Sequenzen |
| G0c0, G0c1, ... | Chips der Sequenz G0 |
| i, k | Indizes |
| n | Anzahl der zweiten Sequenzen in der Gruppe |
| M0, M1, ... | Anzahl der in der zweiten Sequenz F0 bzw. F1 etc. vorhandenen zweiten Chips |
| P0, P1, P2, ... | erste Sequenzen, PN-Sequenzen, erste Codes (sendeseitig) |
| P0c0, P0c1, ... | Chips der ersten Sequenz P0, "erste" Chips von P0 |
| Prec | Leistung am Antennenanschluß, Empfangsleistung |
| r | Funksignal, Empfangssignal |
| rsF0, rsF1, ... | Korrelationsergebnisse |
| rsFmax | betragsmaximales Korrelationsergebnis (vorzeichenbehaftet) |
| s | demoduliertes (und ggf. entzerrtes) Signal; Soft-Informationswerte |
| t0, t1, ... | Produktsignale |
| TS | Symbolperiode |

**Patentansprüche**

1. Detektionseinheit (28) zur Detektion von in einem demodulierten Signal (s) enthaltenen Datensymbolen (d0, d1, ...), wobei sendeseitig eine Bandspreizung mit Hilfe von ersten Sequenzen (P0, P1, ...) erfolgt, deren erste Chips (P0c0, P0c1, ...) jeweils einen von zwei unterschiedlichen ersten Werten ($\pm 1$; 0,1) annehmen, enthaltend:

   a) eine Sequenzbereitstellungseinheit (25), die zum Bereitstellen einer Gruppe von zweiten Sequenzen (F0, F1, ...) mit mindestens einem zweiten Chip (F0c1, F0c4, ...) ausgebildet ist, wobei jede zweite Sequenz (F0) einer ersten Sequenz (P0) zugeordnet ist und jeder zweite Chip (F0c1, F0c4, ...) einen jeweiligen von mindestens zwei unterschiedlichen zweiten Werten ($\pm 2$; $\pm 2, \pm 4$; $\pm 2, \pm 4, \pm 8$) annimmt, die sich betragsmäßig von den ersten Werten unterscheiden, und wobei die Gruppe mindestens eine zweite Sequenz aufweist, die höherstufiger ist als die ersten Sequenzen,
   b) eine mit der Sequenzbereitstellungseinheit (25) verbundene Korrelationseinheit (23), die zum Berechnen von Korrelationsergebnissen (rsF0, rsF1, ...) durch Korrelieren des demodulierten Signals (s) mit jeder zweiten Sequenz (F0, F1, ...) der Gruppe ausgebildet ist, und

c) eine mit der Korrelationseinheit (23) verbundene Auswerteeinheit (24), die zum Ableiten der Werte der Datensymbole (d0, d1, ...) durch Auswerten der Korrelationsergebnisse (rsF0, rsF1, ...) ausgebildet ist.

2. Detektionseinheit nach Anspruch 1, **dadurch gekennzeichnet, daß** der Wert des mindestens einen zweiten Chips (F0c1, F0c4, ...) oder/und seine Chipposition innerhalb seiner zweiten Sequenz (F0) so gewählt ist, daß die Fehlerwahrscheinlichkeit der Detektion infolge der Korrelation mit dieser zweiten Sequenz (F0) sinkt, wenn die Datensymbole (d0, d1, ...) über mindestens einen typischen übertragungskanal (ch1, ch2, ...) übertragen werden.

3. Detektionseinheit nach Anspruch 1 oder 2, **dadurch gekennzeichnet, daß** die Anzahl (M0) der in einer zweiten Sequenz (F0) vorhandenen zweiten Chips (F0c1, F0c4, ...) so gewählt ist, daß eine diese Anzahl (M0) übersteigende Zahl von zweiten Chips keine wesentliche Senkung der Fehlerwahrscheinlichkeit der Detektion bewirkt, wenn die Datensymbole (d0, d1, ...) über mindestens einen typischen Übertragungskanal (ch1, ch2, ...) übertragen werden.

4. Detektionseinheit nach einem der vorhergehenden Ansprüche, **dadurch gekennzeichnet, daß** jeder zweite Chip (F0c1, F0c4, ...) einen jeweiligen von mindestens zwei unterschiedlichen zweiten werten ($\pm 2$; $\pm 2, \pm 4$; $\pm 2, \pm 4, \pm 8$) annimmt, die betragsmäßig jeweils einer ganzzahligen positiven Potenz von zwei ($2^1$, $2^2$, $2^3$) entsprechen.

5. Detektionseinheit nach einem der vorhergehenden Ansprüche, **dadurch gekennzeichnet, daß** jeder zweite Chip (F0c1, F0c4, ...) einen jeweiligen von vier unterschiedlichen zweiten werten ($\pm 2, \pm 4$) annimmt, die betragsmäßig dem doppelten oder vierfachen wert eines der ersten werte entsprechen.

6. Detektionseinheit nach einem der Ansprüche 1 bis 4, **dadurch gekennzeichnet, daß** jeder zweite Chip (F0c1, F0c4, ...) einen jeweiligen von zwei unterschiedlichen zweiten Werten ($\pm 2$) annimmt, die betragsmäßig dem doppelten wert eines der ersten werte entsprechen.

7. Detektionseinheit nach einem der vorhergehenden Ansprüche, **dadurch gekennzeichnet, daß** das Vorzeichen jedes zweiten Chips (F0c1, F0c4, ...) einer zweiten Sequenz (F0) übereinstimmt mit dem Vorzeichen des positionsgleichen Chips (G0c1, G0c4, ...) derjenigen empfängerseitig verwendbaren zweistufigen Sequenz (GO), die derjenigen ersten Sequenz (P0) zugeordnet ist, der diese zweite Sequenz (F0) zugeordnet ist.

8. Detektionseinheit nach einem der vorhergehenden Ansprüche, **dadurch gekennzeichnet, daß** jede zweite Sequenz (F0) mindestens einen dritten Chip (F0c0, F0c2,...) aufweist, der jeweils einen von zwei unterschiedlichen dritten werten ($\pm 1$) annimmt, die betragsmäßig mit einem der ersten Werte übereinstimmen.

9. Detektionseinheit nach Anspruch 8, **dadurch gekennzeichnet, daß** in jeder zweiten Sequenz (F0) die Gesamtzahl der zweiten und dritten Chips mit der Zahl der in dieser zweiten Sequenz (F0) insgesamt vorhandenen Chips übereinstimmt.

10. Detektionseinheit nach einem der vorhergehenden Ansprüche, **dadurch gekennzeichnet, daß** die von der Sequenzbereitstellungseinheit (25) bereitgestellte Gruppe $n \geq 1$ zweite Sequenzen (F0, F1, ...) umfaßt und die Korrelationseinheit (23) folgende Einheiten aufweist:

a) n jeweils mit der Sequenzbereitstellungseinheit (25) verbundene Multipliziereinheiten (35-0, 35-1, ...) zum Berechnen von *n* Produktsignalen (t0, t1, ...) durch Multiplizieren von Signalwerten des demodulierten Signals (s) mit Chipwerten jeweils einer der zweiten Sequenzen (F0, F1, ...), und
b) *n* jeweils mit einer der Multipliziereinheiten (35-0, 35-1, ...) verbundene Integrationseinheiten (36-0, 36-1, ...) zum Bereitstellen von *n* Korrelationsergebnissen (rsF0, rsF1, ...) durch Addieren einer Anzahl von Signalwerten von jeweils einem der *n* Produktsignale (t0, t1, ...).

11. Detektionseinheit nach Anspruch 10, **dadurch gekennzeichnet, daß** die Multipliziereinheiten (35-0, 35-1, ...) Mittel zur Vorzeichenumkehr und Mittel zur Bitverschiebung aufweisen.

12. Detektionseinheit nach einem der vorhergehenden Ansprüche, **dadurch gekennzeichnet, daß** die Sequenzbereitstellungseinheit (25) genau ein Speichermittel (34) aufweist, das ausgebildet ist, genau eine der zweiten Sequenzen (F0, F1, ...) zu speichern.

**13.** Detektionseinheit nach Anspruch 12, **dadurch gekennzeichnet, daß** das Speichermittel ein rückgekoppeltes Schieberegister (34) aufweist.

**14.** Detektionseinheit nach Anspruch 13, **dadurch gekennzeichnet, daß** Mittel zum Takten des rückgekoppelten Schieberegisters (34) vorgesehen sind und die Sequenzbereitstellungseinheit (25) ausgebildet ist, die zweiten Sequenzen (F0, F1, ...) an Ausgängen von jeweiligen Registerzellen (34-0, 34-28, ...) des rückgekoppelten Schieberegisters (34) bereitzustellen.

**15.** Sende-/Empfangsvorrichtung (11-13), insbesondere für ein Datenübertragungssystem (10) nach dem IEEE-Standard 802.15.4, beinhaltend

a) eine Antenne (14),
b) eine mit der Antenne (14) verbundene Sendeeinheit (15) zum Senden von Daten insbesondere nach IEEE 802.15.4, wobei die Sendeeinheit ausgebildet ist, eine Bandspreizung mit Hilfe von ersten Sequenzen (P0, P1, ...) durchzuführen, deren erste Chips (P0c0, P0c1, ...) jeweils einen von zwei unterschiedlichen ersten Werten ($\pm 1$; 0,1) annehmen,
c) eine mit der Antenne (14) verbundene Empfangseinheit (16) mit einer Detektionseinheit (28) nach einem der Ansprüche 1 bis 14,
d) eine mit der Sendeeinheit (15) und der Empfangseinheit (16) verbundene Kontrolleinheit (17) zur Steuerung der Sendeeinheit (15) und der Empfangseinheit (16).

**16.** Integrierte Schaltung, insbesondere für eine Sende-/Empfangsvorrichtung nach Anspruch 15, mit einer Detektionseinheit (28) nach einem der Ansprüche 1 bis 14.

**17.** Verfahren zur Detektion von in einem demodulierten Signal (s) enthaltenen Datensymbolen (d0, d1, ...), wobei sendeseitig eine Bandspreizung mit Hilfe von ersten Sequenzen (P0, P1, ...) erfolgt, deren erste Chips (P0c0, P0c1, ...) jeweils einen von zwei unterschiedlichen ersten werten ($\pm 1$; 0,1) annehmen, mit den Schritten:

a) Bereitstellen einer Gruppe von zweiten Sequenzen (F0, F1, ...) mit mindestens einem zweiten Chip (F0c1, F0c4, ...), wobei jede zweite Sequenz (F0) einer ersten Sequenz (P0) zugeordnet ist und jeder zweite Chip (F0c1, F0c4, ...) einen jeweiligen von mindestens zwei unterschiedlichen zweiten Werten ($\pm 2$; $\pm 2, \pm 4$; $\pm 2, \pm 4, \pm 8$) annimmt, die sich betragsmäßig von den ersten Werten unterscheiden, und wobei die Gruppe mindestens eine zweite Sequenz aufweist, die höherstufiger ist als die ersten Sequenzen,
b) Berechnen von Korrelationsergebnissen (rsF0, rsF1, ...) durch Korrelieren des demodulierten Signals (s) mit jeder zweiten Sequenz (F0, F1, ...) der Gruppe, und
c) Ableiten der Werte der Datensymbole (d0, d1, ...) durch Auswerten der Korrelationsergebnisse (rsF0, rsF1, ...).

**18.** Verfahren nach Anspruch 17, **dadurch gekennzeichnet, daß** der Wert des mindestens einen zweiten Chips (F0c1, F0c4, ...) oder/und seine Chipposition innerhalb seiner zweiten Sequenz (F0) so gewählt ist, daß die Fehlerwahrscheinlichkeit der Detektion infolge der Korrelation mit dieser zweiten Sequenz (F0) sinkt, wenn die Datensymbole (d0, d1, ...) über mindestens einen typischen Übertragungskanal (ch1, ch2, ...) übertragen werden.

**19.** Verfahren nach Anspruch 17 oder 18, **dadurch gekennzeichnet, daß** die Anzahl (M0) der in einer zweiten Sequenz (F0) vorhandenen zweiten Chips (F0c1, F0c4, ...) so gewählt ist, daß eine diese Anzahl (M0) übersteigende Zahl von zweiten Chips keine wesentliche Senkung der Fehlerwahrscheinlichkeit der Detektion bewirkt, wenn die Datensymbole (d0, d1, ...) über mindestens einen typischen Übertragungskanal (ch1, ch2, ...) übertragen werden.

**20.** Verfahren nach einem der Ansprüche 17 bis 19, **dadurch gekennzeichnet, daß** jeder zweite Chip (F0c1, F0c4, ...) einen jeweiligen von mindestens zwei unterschiedlichen zweiten Werten ($\pm 2$; $\pm 2, \pm 4$; $\pm 2, \pm 4, \pm 8$) annimmt, die betragsmäßig jeweils einer ganzzahligen positiven Potenz von zwei ($2^1$, $2^2$, $2^3$) entsprechen.

**21.** Verfahren nach einem der Ansprüche 17 bis 20, **dadurch gekennzeichnet, daß** jeder zweite Chip (F0c1, F0c4, ...) einen jeweiligen von vier unterschiedlichen zweiten Werten ($\pm 2, \pm 4$) annimmt, die betragsmäßig dem doppelten oder vierfachen Wert eines der ersten Werte entsprechen.

**22.** Verfahren nach einem der Ansprüche 17 bis 20, **dadurch gekennzeichnet, daß** jeder zweite Chip (F0c1, F0c4, ...) einen jeweiligen von zwei unterschiedlichen zweiten Werten ($\pm 2$) annimmt, die betragsmäßig dem doppelten Wert eines der ersten Werte entsprechen.

23. Verfahren nach einem der Ansprüche 17 bis 22, **dadurch gekennzeichnet, daß** das Vorzeichen jedes zweiten Chips (F0c1, F0c4, ...) einer zweiten Sequenz (F0) übereinstimmt mit dem Vorzeichen des positionsgleichen Chips (G0c1, G0c4, ...) derjenigen empfängerseitig verwendbaren zweistufigen Sequenz (GO), die derjenigen ersten Sequenz (P0) zugeordnet ist, der diese zweite Sequenz (F0) zugeordnet ist.

24. Verfahren nach einem der Ansprüche 17 bis 23, **dadurch gekennzeichnet, daß** jede zweite Sequenz (F0) mindestens einen dritten Chip (F0c0, F0c2, ...) aufweist, der jeweils einen von zwei unterschiedlichen dritten werten ($\pm 1$) annimmt, die betragsmäßig mit einem der ersten werte übereinstimmen.

25. Verfahren nach Anspruch 24, **dadurch gekennzeichnet, daß** in jeder zweiten Sequenz (F0) die Gesamtzahl der zweiten und dritten Chips mit der Zahl der in dieser zweiten Sequenz (F0) insgesamt vorhandenen Chips übereinstimmt.

FIG.1

FIG.2

FIG.5

FIG. 4

Europäisches
Patentamt

**EUROPÄISCHER RECHERCHENBERICHT**

Nummer der Anmeldung

EP 06 02 2895

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2005/094713 A1 (YELLIN DANIEL [IL]) 5. Mai 2005 (2005-05-05) * Zusammenfassung * * Absätze [0012], [0037] - [0041], [0085]; Abbildung 2 * ----- | 1-3, 15-19 | INV. H04B1/707 |
| X | EP 0 602 843 A2 (AT & T CORP [US]) 22. Juni 1994 (1994-06-22) * Zusammenfassung * * Seite 2, Zeile 21 - Zeile 23 * * Seite 2, Zeile 46 - Zeile 57 * * Seite 3, Zeile 21 - Zeile 22 * * Seite 3, Zeile 39 - Seite 5, Zeile 32 * ----- | 1-3, 15-19 | |
| X | WO 01/43302 A (ERICSSON TELEFON AB L M [SE]) 14. Juni 2001 (2001-06-14) * Zusammenfassung * * Seite 4, Zeile 14 - Zeile 24 * * Seite 5, Zeile 6 - Zeile 13 * * Seite 9, Zeile 10 - Zeile 26 * * Seite 14, Zeile 18 - Seite 15, Zeile 2 * ----- | 1-3, 15-19 | |

RECHERCHIERTE SACHGEBIETE (IPC)

H04B

Der vorliegende Recherchenbericht wurde für alle Patentansprüche erstellt

| Recherchenort | Abschlußdatum der Recherche | Prüfer |
|---|---|---|
| München | 20. Dezember 2006 | Bossen, Michael |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes
Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 06 02 2895

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-12-2006

| Im Recherchenbericht angeführtes Patentdokument | Datum der Veröffentlichung | Mitglied(er) der Patentfamilie | Datum der Veröffentlichung |
|---|---|---|---|
| US 2005094713 A1 | 05-05-2005 | EP 1678841 A1<br>WO 2005046075 A1 | 12-07-2006<br>19-05-2005 |
| EP 0602843 A2 | 22-06-1994 | CA 2102082 A1<br>DE 69330740 D1<br>DE 69330740 T2<br>JP 3088227 B2<br>JP 6261021 A<br>US 5345468 A | 17-06-1994<br>18-10-2001<br>04-07-2002<br>18-09-2000<br>16-09-1994<br>06-09-1994 |
| WO 0143302 A | 14-06-2001 | AR 032609 A1<br>AU 1319701 A<br>CN 1433596 A<br>EP 1236286 A1<br>JP 2003516698 T<br>TW 484260 B<br>US 6810073 B1 | 19-11-2003<br>18-06-2001<br>30-07-2003<br>04-09-2002<br>13-05-2003<br>21-04-2002<br>26-10-2004 |

Für nähere Einzelheiten zu diesem Anhang : siehe Amtsblatt des Europäischen Patentamts, Nr.12/82